# EUROPEAN PATENT APPLICATION

(11) **EP 4 398 325 A1**
(43) Date of publication of application: **10.07.2024**
(21) Application number: 23792210.9
(22) Date of filing: 20.04.2023
(51) Int. Cl.: H01M 4/04, H01M 4/13, H01M 4/62, H01M 10/052

(54) **SECONDARY BATTERY DRY ELECTRODE MANUFACTURING METHOD**

(30) Priority: 20.04.2022 KR 20220049195
(71) Applicant: LG Energy Solution, Ltd., Seoul 07335 (KR)
(72) Inventor: KWAK, Sang-Min, Daejeon 34122 (KR); KANG, Seong-Wook, Daejeon 34122 (KR); SHIN, Dong-Mok, Daejeon 34122 (KR); SHIN, Dong-Oh, Daejeon 34122 (KR); YOON, Kyung-Hwan, Daejeon 34122 (KR); LEE, Ki-Seok, Daejeon 34122 (KR); LEE, Nam-Jeong, Daejeon 34122 (KR); HAN, Jae-Sung, Daejeon 34122 (KR); YOO, Kwang-Ho, Daejeon 34122 (KR)
(74) Representative: Plasseraud IP
(86) International application number: PCT/KR2023/005393
(87) International publication number: WO 2023/204636

(57) **Abstract**

The present disclosure relates to a dry electrode for a secondary battery, a method for manufacturing the same and a secondary battery comprising the same, and the method for manufacturing the dry electrode according to an aspect of the present disclosure comprises (S1) obtaining a first electrode powder from a mixture comprising an active material and a binder; (S2) kneading the first electrode powder and a reused electrode powder to obtain a mass of mixture; (S3) pulverizing the mass of mixture to obtain a second electrode powder; (S4) calendaring the second electrode powder to obtain an electrode film; and (S5) placing and laminating the electrode film on at least one surface of a current collector.

## Description

### TECHNICAL FIELD

The present disclosure relates to a dry electrode and a secondary battery comprising the same.

The present application claims priority to Korean Patent Application No. 10-2022-0049195 filed on April 20, 2022 in the Republic of Korea, the disclosures of which are incorporated herein by reference.

### BACKGROUND ART

Due to the increasing use of fossil fuels, there is a growing demand for the use of alternative energy and clean energy, and in such circumstances, many studies are being made in the field of energy generation and storage using electrochemistry.

Currently, a typical example of electrochemical devices using electrical and chemical energy is secondary batteries, and the range of application of secondary batteries is gradually expanding.

One of typical secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.

A process of manufacturing a lithium secondary battery largely includes three steps: an electrode process, an assembly process and an aging process. The electrode process includes an active material mixing process, an electrode coating process, a drying process, a rolling process, a slitting process and a winding process.

The active material mixing process is a process of mixing coating materials for forming an electrode active layer in which electrochemical reaction occurs in the electrode, and specifically, an electrode active material which is the essential element of the electrode is mixed with an additive such as a conductive material, fillers, a binder for binding powder and adhering to a current collector, and a solvent for making viscous and dispersing power to prepare a flowable slurry.

The mixture composition for forming the electrode active layer is referred to as an electrode mixture in a broad sense.

Subsequently, the electrode coating process of coating the electrode mixture on an electrically conductive current collector and the drying process for removing a solvent from the electrode mixture are performed, followed by rolling, to manufacture the electrode with a predetermined thickness.

Meanwhile, defects such as pinholes or cracks may occur in the already formed electrode active layer due to evaporation of the solvent contained in the electrode mixture during the drying. Additionally, the active layer is not uniformly dried all over the entire region, and due to a difference in solvent evaporation rate, some regions get dried earlier and powder at the corresponding regions float, and some other regions get dried later, resulting in low quality of the electrode.

Accordingly, recently, many studies are being made to manufacture dry electrodes without solvents.

In general, a dry electrode is manufactured by laminating a free-standing film comprising an active material, a binder and a conductive material on a current collector. During the process, a high shear mixing process such as jet-milling is performed to fibrillate the binder, and in this instance, when the high shear mixing process is applied to the fragile active material, fine particles of small size are produced in large amounts, which may degrade the mechanical performance or the electrical and chemical performance, and in case that high shear mixing is too much, the produced binder fibers are broken, which makes the free-standing film less flexible. Additionally, the constituent components are attached to the inside of the equipment during the jet-milling, which disturbs a flow of high pressure air, resulting in clogged channels, and it is not favorable for mass production. Therefore, there is an urgent need for the development of dry electrode manufacturing technology to solve the problem.

On the other hand, there are problems such as defect induced loss and edge slitting induced loss in the process of making the free-standing film of the dry electrode. To solve the problems, the reuse of defective products in the manufacture of the electrode film is under research and development. However, it has been reported that the reuse of defective products causes another problem such as poor appearance quality of the electrode film and degradation in the mechanical properties of the film.

Accordingly, there is an urgent need for the development of technology to make a free-standing film with improved quality reusing defective products.

### DISCLOSURE

### Technical Problem

The present disclosure is directed to providing a method for manufacturing a dry electrode for minimizing losses of raw materials by reusing defective products and cut products having slit edges occurring in a process of making a free-standing film for manufacturing the dry electrode.

The present disclosure is further directed to providing a method for manufacturing a dry electrode using the reused raw materials with improved appearance quality and mechanical performance.

### Technical Solution

To solve the above-described problem, according to an aspect of the present disclosure, there is provided a method for manufacturing a dry electrode of the following embodiments.

According to a first embodiment, there is provided the method for manufacturing the dry electrode, comprising (S1) obtaining a first electrode powder from a mixture comprising an active material and a binder, (S2) kneading the first electrode powder and a reused electrode powder to obtain a mass of mixture, (S3) pulverizing the mass of mixture to obtain a second electrode powder, (S4) calendaring the second electrode powder to obtain an electrode film, and (S5) placing and laminating the electrode film on at least one surface of a current collector.

According to a second embodiment, in the first embodiment, the reused electrode powder may be obtained by pulverizing defective films or cut films occurring in the step of obtaining the electrode film in the method for manufacturing the dry electrode.

According to a third embodiment, in the first or second embodiment, the reused electrode powder may be obtained by pulverizing the electrode film obtained from the first electrode powder, comprising the following steps of:
(S1-1) kneading the first electrode powder to obtain the mass of mixture;
(S1-2) pulverizing the mass of mixture to obtain an electrode powder; and
(S1-3) calendaring the electrode powder to obtain the electrode film.

According to a fourth embodiment, in any one of the first to third embodiments, the step (S4) may further comprise carrying out edge slitting of a primary electrode film obtained by calendaring the second electrode powder to obtain the electrode film, wherein the steps (S1) to (S4) are repeatedly performed n times, wherein n is an integer of 2 or greater, and wherein the reused electrode powder used in the step (S2) n-th time is obtained by pulverizing cut primary electrode films through edge slitting in the step (S4) first to n-1-th times.

According to a fifth embodiment, in any one of the first to fourth embodiments, the step (S2) may further comprise, before the kneading, mixing the first electrode powder and the reused electrode powder to obtain the electrode powder mixture, wherein the mass of mixture is obtained by kneading the obtained electrode powder mixture.

According to a sixth embodiment, in any one of the first to fifth embodiments, in the step (S2), a weight of the first electrode powder may be 30 wt% or more based on a total 100 wt% of the first electrode powder and the reused electrode powder.

According to a seventh embodiment, in any one of the first to sixth embodiments, in the step (S2), a weight ratio of the first electrode powder and the reused electrode powder may be 30:70 to 99: 1.

According to an eighth embodiment, in any one of the first to seventh embodiments, the first electrode powder may be a mixture obtained by the step of obtaining a mixture comprising the active material and the binder.

According to a ninth embodiment, in any one of the first to eighth embodiments, the kneading in the step (S2) may be performed at 70°C to 200°C under a pressure which is equal to or higher than atmospheric pressure.

According to a tenth embodiment, in any one of the first to ninth embodiments, the kneading in the step (S2) may be performed at a shear rate of 10/s to 500/s for 1 minute to 30 minutes.

According to an eleventh embodiment, in any one of the first to tenth embodiments, the method for manufacturing the dry electrode may further comprise, before the calendaring in the (S4) after the step (S3), sieving the pulverized second electrode powder.

According to another aspect of the present disclosure, there is a dry electrode of the following embodiment.

The dry electrode according to a twelfth embodiment may comprise an electrode current collector; and an electrode film disposed on the electrode current collector, and comprising an active material and a binder, wherein the dry electrode is manufactured by the manufacturing method of any one of the first to eleventh embodiments.

According to another aspect of the present disclosure, there is a secondary battery of the following embodiment.

The secondary battery according to a thirteenth embodiment may comprise an electrode assembly comprising a positive electrode, a negative electrode and a separator and a battery case accommodating the electrode assembly and a lithium containing nonaqueous electrolyte, wherein at least one of the positive electrode or the negative electrode is the dry electrode according to the twelfth embodiment.

According to another aspect of the present disclosure, there is an energy storage system of the following embodiment.

The energy storage system according to a fourteenth embodiment may comprise the secondary battery according to the thirteenth embodiment as a unit battery.

### Advantageous Effects

According to the present disclosure, it may be possible to reduce the losses of the raw material when making the free-standing electrode film for the dry electrode.

Furthermore, it may be possible to provide the dry electrode with improved appearance quality and mechanical properties.

### DESCRIPTION OF DRAWINGS

The accompanying drawings illustrate exemplary embodiments of the present disclosure and together with the foregoing disclosure, serve to provide a further understanding of the technical aspect of the present disclosure, and thus the present disclosure is not construed as being limited to the drawings.

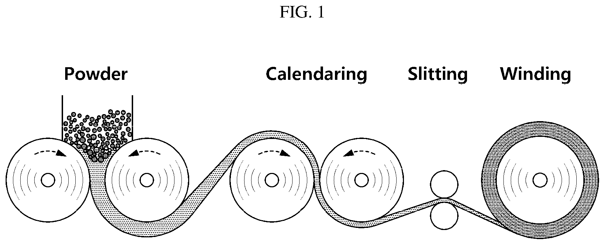

FIG. 1 is a diagram schematically showing a process for making a free-standing electrode film according to the related art.
FIG. 2 is a flowchart schematically showing a method for manufacturing a dry electrode according to an embodiment of the present disclosure.
FIG. 3 is an image showing the appearance of electrode films of example 1 (left) and comparative example 2 (right) in the disclosure.

### BEST MODE

Hereinafter, the present disclosure will be described in detail.

As used herein, "A and/or B" refers to "either A or B or both".

The present disclosure relates to a method for manufacturing an electrode comprising a free-standing type dry electrode film and an electrode for an electrochemical device obtained by the manufacturing method. The electrochemical device may any device in which electrochemical reaction takes place, and specific examples may include any type of primary and secondary batteries, fuel cells, solar cells or capacitors such as supercapacitors. The secondary batteries may include, for example, lithium ion secondary batteries in which a lithium ion works as an ion conductor.

A method for manufacturing a dry electrode according to an aspect of the present disclosure comprises:
(S1) obtaining a first electrode powder from a mixture comprising an active material and a binder, (S2) kneading the first electrode powder and a reused electrode powder to obtain a mass of mixture, (S3) pulverizing the mass of mixture to obtain a second electrode powder, (S4) calendaring the second electrode powder to obtain an electrode film, and (S5) placing and laminating the electrode film on at least one surface of a current collector.

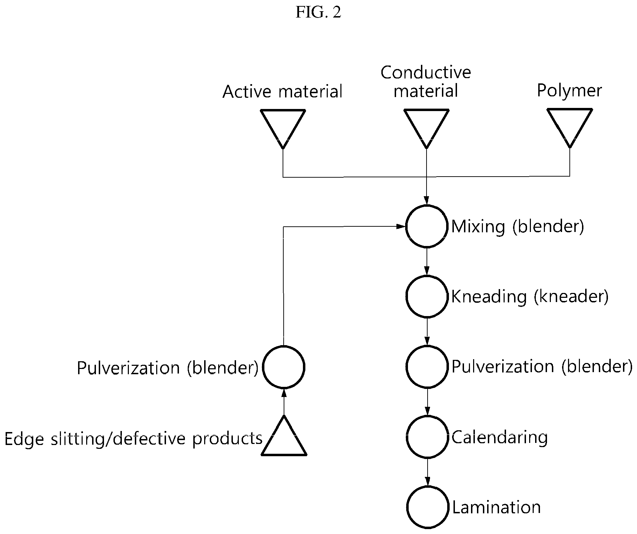

FIG. 2 is a flowchart schematically showing a method for manufacturing a dry electrode according to an embodiment of the present disclosure.

Referring to FIG. 2, according to the present disclosure, the method comprises obtaining the first electrode powder from the mixture comprising the active material and the binder, and optionally a conductive material, kneading the first electrode powder and the reused electrode powder to obtain the mass of mixture, and pulverizing and calendaring the mass of mixture to obtain the electrode film.

According to an embodiment of the present disclosure, the reused electrode powder may be obtained by pulverizing defective films or cut films by edge slitting occurring in the process of obtaining electrode films for manufacturing dry electrodes.

According to an embodiment of the present disclosure, the reused electrode powder may be obtained by pulverizing the defective films and/or the cut films occurring in the process of obtaining electrode films using only the first electrode powder.

According to an embodiment of the present disclosure, the reused electrode powder may be obtained by pulverizing the electrode film obtained from the first electrode powder comprising the following steps of:
(S1-1) kneading the first electrode powder to obtain the mass of mixture;
(S1-2) pulverizing the mass of mixture to obtain the electrode powder; and
(S1-3) calendaring the electrode powder to obtain the electrode film.

According to an embodiment of the present disclosure, for details of the 'kneading' in the step (S1-1), reference may be made to 'kneading' in the step (S2) as described below. For details of the 'pulverization' in the step (S1-2), reference may be made to 'pulverization' in the step (S3), and for details of the 'calendaring' in the step (S 1-3), reference may be made to 'calendaring' in the step (S4) as described below. Additionally, for details of the 'pulverization' of the electrode film, reference may be made to 'pulverization' as described below, but is not limited thereto.

According to another embodiment of the present disclosure, the reused electrode film may be obtained again by pulverizing the defective films and/or the cut films occurring in the process of obtaining the electrode film using the first electrode powder and the reused electrode powder. That is, the reused electrode powder may comprise not only the result of reusing the raw materials for making the electrode film first time but also the result of reusing second time, third time ... n-th time.

According to an embodiment of the present disclosure, the reused electrode powder may be obtained by pulverizing the defective films and/or the cut films occurring in the step (S4) of obtaining the electrode film.

In another embodiment of the present disclosure, the steps (S1) to (S4) may be repeatedly performed n times (where n is an integer of 2 or greater), and the reused electrode powder used in the step (S2) n-th time may be obtained by pulverizing the defective films and/or the cut films occurring in the process of obtaining the electrode film obtained in the step (S4) first to n-1-th times. Specifically, the step (S4) may comprise calendaring the second electrode powder to obtain a primary electrode film and further comprise edge slitting of the primary electrode film to obtain the electrode film, and the reused electrode powder used in the (S2) step n-time may be obtained by pulverizing the cut primary electrode films through edge slitting in the step (S4) first to n-1-th times.

The reused electrode powder may be added during the kneading of the first electrode powder, i.e., the newly produced electrode powder, and the mass of mixture may be formed by kneading the reused electrode powder together with the first electrode powder.

In this instance, according to an embodiment of the present disclosure, before kneading the first electrode powder and the reused electrode powder, the method may further comprise mixing the first electrode powder and the reused electrode powder to obtain an electrode powder mixture. That is, the step (S2) may comprise mixing the obtained first electrode powder with the reused electrode powder to obtain the electrode powder mixture and kneading the obtained electrode powder mixture to obtain the mass of mixture.

When the electrode powder mixture is obtained by mixing the first electrode powder and the reused electrode powder before kneading the first electrode powder and the reused electrode powder, it may be possible to uniformly mix the powder, thereby ensuring uniform properties of the final electrode, but the present disclosure is not limited thereto.

According to an embodiment of the present disclosure, in the step (S2), the weight of the first electrode powder may be 30 wt% or more based on the total 100 wt% of the first electrode powder and the reused electrode powder.

For example, the weight of the first electrode powder may be 30 wt% or more, 35 wt% or more, 40 wt% or more, 45 wt% or more, 50 wt% or more, 55 wt% or more, 60 wt% or more, 65 wt% or more, 70 wt% or more, 75 wt% or more or 80 wt% or more based on the total 100 wt% of the first electrode powder and the reused electrode powder. When the weight of the first electrode powder is in the above-described range, it may be possible to improve the mechanical properties of the resulting electrode film, but the present disclosure is not limited thereto.

According to an embodiment of the present disclosure, in the step (S2), a weight ratio of the first electrode powder and the reused electrode powder may be, for example, 30:70 to 99:1, 30:70 to 95:5, 30:70 to 90:10, 35:75 to 85:15, 40:60 to 80:20, 45:55 to 75:25, 50:50 to 70:30, 50:50 to 60:40 or 60:40 to 80:20.

According to an embodiment of the present disclosure, when the weight ratio of the first electrode powder and the reused electrode powder is in the above-described range, it may be possible to improve the quality of the resulting electrode film, and manufacture the electrode film with high quality regardless of the number of times the reused electrode powder is reused.

According to an embodiment of the present disclosure, the pulverization means for obtaining the reused electrode powder is not limited to a particular type, and may include, for example, a blender; and a grinder such as a cutter mill or a fine impact mill. The pulverization may be preferably performed so that the size of the reused electrode powder is equal to the size of the first electrode powder to ensure uniformity in the obtained mass of mixture. Hereinafter, the first electrode powder will be described in more detail.

First, the first electrode powder is obtained from the mixture comprising the active material, the conductive material and the binder.

According to an embodiment of the present disclosure, both the reused electrode powder and the first electrode powder comprises the active material and the binder. According to an embodiment of the present disclosure, at least one of the reused electrode powder and the first electrode powder may further comprise, optionally, the conductive material. In this instance, the types of the active material, the conductive material and the binder included in the reused electrode powder and the first electrode powder may be the same or different, and the present disclosure is not limited thereto.

According to another embodiment of the present disclosure, it may be preferable to obtain the first electrode powder using the same type as the active material and the binder, and optionally the conductive material included in the reused electrode powder that will be used in the step (S2) in terms of the quality of the electrode film.

According to an embodiment of the present disclosure, the first electrode powder may be a mixture obtained by mixing the active material and the binder. That is, the first electrode powder may be a powder mixture formed by mixing the active material and the binder in powder state. If necessary, the conductive material may be further included, but the present disclosure is not limited thereto.

The above-described step is the step of obtaining the mixture by mixing the active material and the binder to make the first electrode powder. In this instance, the mixing for making the mixture may be performed for uniform distribution of the active material and the binder, and due to the mixing into a powder form, any method for simply mixing them may be used without limitation. Since the present disclosure manufactures the dry electrode without using a solvent, the mixing may be performed by dry mixing, and may be performed by putting the above-described materials into a blender or a supermixer.

According to an embodiment of the present disclosure, in case that the mixing for making the mixture in the mixing step for obtaining the first electrode powder is performed in a blender, the mixing may be performed in the blender at 5,000 rpm to 20,000 rpm for 30 seconds to 20 minutes, specifically at 10,000 rpm to 15,000 rpm for 30 seconds to 5 minutes, to ensure uniformity.

According to another embodiment of the present disclosure, in case that the mixing is performed in a supermixer, the mixing may be performed in the supermixer at 500 rpm to 2,500 rpm, specifically 1,000 rpm to 2,000 rpm to ensure uniformity, and the process time may be adjusted.

According to an embodiment of the present disclosure, the dry electrode to be manufactured may be a positive electrode, and the active material may be a positive electrode active material.

The positive electrode active material may comprise, for example, at least one of lithium transition metal oxide; lithium metal ferrophosphate; lithium nickel-manganese-cobalt oxide; or lithium nickel-manganese-cobalt oxide with partial substitution of other transition metal, but is not limited thereto. Specifically, the positive electrode active material may include, for example, layered compounds such as lithium cobalt oxide (LiCoO₂), lithium nickel oxide (LiNiO₂) or compounds with one or more transition metal substitution; lithium manganese oxide such as formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by formula LiNi₁₋ₓMₓO₂ (where M = Co, Mn, Al, Cu, Fe, Mg, B or Ga, x = 0.01 to 0.3); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); lithium metal iron phosphate LiMPO₄ (where M = Fe, CO, Ni, or Mn); lithium nickel-manganese-cobalt oxide Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); lithium nickel-manganese-cobalt oxide with partial substitution of aluminum such as Liₐ[Ni_{b}Co_{c}Mn_{d}Alₑ]_{1-f}M1_{f}O₂ (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01<e<0.1, 0≤f≤0.1); lithium nickel-manganese-cobalt oxide with partial substitution of other transition metal such as Li₁₊ₓ(NiₐCo_{b}Mn_{c}M_{d})₁₋ₓO₂ (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; Fe₂(MoO₄)₃, but is not limited thereto.

According to another embodiment of the present disclosure, the dry electrode to be manufactured may be a negative electrode, and the active material may be a negative electrode active material.

The negative electrode active material may include carbon such as nongraphitizing carbon, graphite-based carbon; metal composite oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni based materials.

According to another embodiment of the present disclosure, the dry electrode may be, specifically, a positive electrode. Accordingly, the active material may be, specifically, the positive electrode active material, and more specifically lithium transition metal oxide, lithium nickel-manganese-cobalt oxide, lithium nickel-manganese-cobalt oxide with partial substitution of other transition metal, lithium iron phosphate.

According to an embodiment of the present disclosure, the positive electrode active material may comprise nickel-manganese-cobalt-aluminum (NCMA). The nickel-manganese-cobalt-aluminum (NCMA) may comprise, for example, Li[Ni_{0.86}Mn_{0.05}Co_{0.07}]Al_{0.2}O₂, but is not limited thereto.

The binder may comprise polytetrafluoroethylene (PTFE), polyolefin, or a mixture thereof, specifically, may comprise polytetrafluoroethylene (PTFE) and more specifically, may be polytetrafluoroethylene (PTFE) .

Specifically, the polytetrafluoroethylene (PTFE) may be included in an amount of 60 wt% or more based on the total weight of the binder.

In another embodiment of the present disclosure, the binder 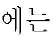 may further comprise at least one of polyethylene oxide (PEO), polyvinylidene fluoride (PVdF), or polyvinylidene fluoride-co-hexafluoropropylene (PVdF-HFP).

The conductive material is not limited to a particular type and may include any material having conductive properties while not causing any chemical change to the corresponding battery, and may comprise, for example, graphite such as natural graphite or artificial graphite; carbon black-based carbon materials such as carbon black, acetylene black, ketjen black, channel black, furnace black, lamp black, thermal black; conductive fibers such as carbon fibers or metal fibers; fluorocarbon; metal powder such as aluminum, nickel powder; conductive whiskers such as zinc oxide, potassium titanate; conductive metal oxide such as titanium oxide; and conductive materials such as polyphenylene derivatives, but specifically, for uniform mixing of the conductive material and improved conductivity, may comprise at least one selected from the group consisting of activated carbon, graphite, carbon black and carbon nanotubes, and more specifically, activated carbon.

According to an embodiment of the present disclosure, a mix ratio of the active material, the conductive material and the binder may be such that a weight ratio of the active material : the conductive material : the binder is 80 to 98 parts by weight : 0 to 10 parts by weight : 0.5 to 10 parts by weight, and specifically, 85 to 98 parts by weight : 0.5 to 5 parts by weight : 0.5 to 10 parts by weight.

When the binder is included in the above-described range of the mix ratio of the active material, the conductive material and the binder, it may be possible to prevent over-fibrillation of the binder in the subsequent kneading step, thereby improving the efficiency of the process, or it may be possible to induce adequate fibrillation, thereby improving the properties of the mixture film, but the present disclosure is not limited thereto.

When the conductive material is included in the above-described range of the mix ratio of the active material, the conductive material and the binder, it may be possible to improve the capacity of the resulting electrode, the properties of the mixture film and conductivity, but the present disclosure is not limited thereto.

According to another embodiment of the present disclosure, the first electrode powder may be a powder obtained by kneading and pulverizing the mixture obtained by the step (S1-1). Specifically, the first electrode powder may be obtained by the method comprising (S1-2) kneading the mixture obtained in the step S1-1 to obtain the mass of mixture and (S1-3) pulverizing the mass of mixture.

The step (S1-2) is the step for obtaining the mass of mixture by fibrillation of the binder in the resulting mixture, and for example, may be referred to as kneading.

According to an embodiment of the present disclosure, in the appearance characteristics of the resulting electrode film, the first electrode powder may be preferably the mixture obtained by mixing the active material and the binder, and optionally the conductive material, i.e., the powder mixture, but the present disclosure is not limited thereto.

As described above, according to the present disclosure, the method comprises the step (S2) of kneading the first electrode powder obtained from the mixture comprising the active material and the binder, and optionally the conductive material and the reused electrode powder to obtain the mass of mixture.

In an embodiment of the present disclosure, before the kneading in the step (S2) after the step (S1), the method may further comprise the step of sieving the obtained first electrode powder. In the sieving step, the pulverized electrode powder may be obtained by filtering out the electrode powder of a predetermined size or more using a mesh having openings of a predetermined size or less.

The kneading in the step (S2) is the step of forming the mass of mixture having uniform distribution of the first electrode powder and the reused electrode powder by binding or connecting the powder by fibrillation of the binder included in the first electrode powder and the reused electrode powder.

The kneading in the step (S2) may be, for example, performed through a kneader, but is not limited thereto. The kneading is the step of forming the mass of mixture containing 100% solids by binding or connecting the active material powder and the conductive material powder by fibrillation of the binder.

Specifically, the kneading in the step (S2) may be performed at the speed of 10 rpm to 100 rpm for 1 minute to 30 minutes, and specifically at the speed of 25 rpm to 50 rpm for 3 minutes to 7 minutes, and in this instance, may be performed at a shear rate in a range between 10/s and 500/s for 1 minute to 30 minutes. More specifically, the shear rate may be in a range between 30/s and 100/s.

Additionally, the kneading step may be performed at high temperature under the pressure that is equal to or higher than the atmospheric pressure, and more specifically, under the higher pressure than the atmospheric pressure.

More specifically, the kneading in the step (S2) may be performed on the mixture in the temperature range between 70°C and 200°C, specifically, 90°C and 180°C or 90°C and 150°C.

In an embodiment of the present disclosure, the kneading in the step (S2) may be performed under the pressure that is equal to or higher than the atmospheric pressure, specifically 1 atm to 60 atm, or 1 atm to 30 atm, or 1.1 atm to 10 atm, 1.1 atm to 6 atm or 1.1 atm to 3 atm.

When the kneading is performed in the above-described condition, it may be possible to achieve adequate fibrillation of the binder during the kneading and agglomeration by the kneading, thereby making it easy to form a film during calendaring, but the present disclosure is not limited thereto.

In an embodiment of the present disclosure, in case that the electrode film is manufactured through calendaring without kneading after mixing the first electrode powder and the reused electrode powder, or in case that the electrode film is manufactured through calendaring after kneading and pulverizing only the first electrode powder and then mixing with the (already kneaded) reused electrode powder, the appearance characteristics of the electrode film may be poor such as spots in the appearance.

Further, when the appearance characteristics of the electrode film are poor, it may result in low uniformity of powder in the resulting electrode film such as nonuniform distribution of the active material in the electrode film, agglomeration of the binder in some regions, nonuniform distribution of the optional conductive material, or nonuniform fibrillation of the binder in the resulting electrode film, and as a consequence, poor quality of the electrode, but the effect of the present disclosure is not limited thereto.

Subsequently, the mass of mixture produced through the kneading may be directly calendared, but in this case, the mass of mixture may be pressed down under strong pressure and high temperature into a film, and as a result, the density of the film may be too high or it fails to obtain a uniform film, and according to the present disclosure, the method comprises the step (S3) of pulverizing the mass of mixture to obtain the second electrode powder.

The pulverization in the step (S3) may be performed to obtain the final electrode powder or the second electrode powder before obtaining the electrode film in the method of the present disclosure. In this instance, the pulverization may be performed using a blender, or a grinder such as a cutter mill or a fine impact mill, but is not limited thereto.

In an embodiment of the present disclosure, in case that the pulverization is performed using a blender, the pulverization may be performed at the speed of 500 rpm to 20,000 rpm for 30 seconds to 10 minutes, and specifically at the speed of 1,000 rpm to 10,000 rpm for 30 seconds to 1 minute.

In another embodiment of the present disclosure, in case that the pulverization is performed using a cutter mill, the pulverization may be, specifically, performed at the speed of 500 rpm or less, for example, 400 rpm to 500 rpm, for 10 seconds to 60 seconds.

In still another embodiment of the present disclosure, in case that the pulverization is performed using an impact mill, the pulverization may be, specifically, performed at the speed of 3,000 rpm to 8,000 rpm, for example, 4,000 rpm to 7,000 rpm, for 10 seconds to 60 seconds.

In an embodiment of the present disclosure, when the pulverization is performed in the above-described condition, the second electrode powder is in sufficient size to form a film, and granulation is minimized, but the present disclosure is not limited thereto.

In an embodiment of the present disclosure, before the calendaring in the step (S4) after the step (S3), the method may further comprise the step of sieving the pulverized second electrode powder. In the sieving step, the pulverized electrode powder may be obtained by filtering out the electrode powder having the predetermined size or more using the mesh having openings of the predetermined size or less. When the method further comprises the sieving step, it may be possible to improve the appearance characteristics and surface uniformity of the film, thereby improving the properties of the film. For example, in case that the resulting electrode powder is too large or agglomerates, there is a high likelihood that the film may have appearance defects such as pinholes and nonuniform surface characteristics due to bridging in the subsequent calendaring process, but the present disclosure is not limited thereto.

Subsequently, in the step (S4), the electrode film is obtained by calendaring using the second electrode powder obtained as described above or the sieved second electrode powder.

The calendaring may be the step of shaping the second electrode powder into a film, and for example, forming into a film shape with the average thickness of 50 *µ*m to 300 *µ*m through roll pressing.

In this instance, the calendaring may be, for example, performed by rolls present on opposite sides, and in this instance, the roll temperature may be 50°C to 200°C, and the rolls present on opposite sides may rotate at different speeds, and the rotational speed is not limited to a particular one.

In an embodiment of the present disclosure, the distance between the rolls present on opposite sides may be, for example, 20 to 500 *µ*m, and may be variously adjusted depending on the number of repetitions of calendaring and the desired thickness of the film, and is not limited to a particular range.

In an embodiment of the present disclosure, the calendaring may be repeatedly performed one or two times or more. For example, the calendaring may be performed three or four times or more.

According to an embodiment of the present disclosure, the step (S4) of obtaining the electrode film may further comprise edge slitting after the calendaring. Specifically, the step (S4) may include carrying out edge slitting of the primary electrode film obtained by calendaring the second electrode powder to obtain the electrode film.

The film obtained through the calendaring (i.e., the primary electrode film) may have a smaller thickness as it goes toward the edge or a nonuniform shape at the edge. Accordingly, the method may further comprise edge slitting to make the thickness of the film obtained through the calendaring uniform over the entire surface or make the shape at the edge uniform by cutting the edge of the film, but the present disclosure is not limited thereto.

The edge slitting may be performed by the means commonly used to manufacture free-standing electrode films and the means is not limited to a particular one.

According to an embodiment of the present disclosure, poor quality electrode films obtained through the calendaring or cut electrode films by the edge slitting may be used as the reused electrode powder after pulverization.

According to an embodiment of the present disclosure, the reused electrode powder may be obtained by pulverizing defective films occurring in the step (S4) of obtaining the electrode film.

According to an embodiment of the present disclosure, the poor quality electrode film may be, for example, the electrode film having the tensile strength of 0.7 MPa or less, specifically less than 0.7 MPa. For example, the tensile strength of the electrode film may be less than 0.7 MPa, less than 0.8 MPa or less than 1 MPa. For example, in case that the tensile strength of the electrode film is less than the above-described range, the film breaks which makes it difficult to wind the film, and thus the electrode film having the above-described quality may be used as the reused electrode powder after pulverization.

The tensile strength may be measured by known methods and the measurement method is not limited to a particular one. For example, the electrode film may be tailored into 1 cm X 5 cm size and pulled at the rate of 5 cm/min using UTM, and a maximum stress value at break may be evaluated as tensile strength, and a change in length before break may be evaluated as elongation.

According to an embodiment of the present disclosure, the step (S4) may include calendaring the second electrode powder to obtain the primary electrode film, and further include edge slitting of the obtained primary electrode film to obtain the electrode film. In this instance, the reused electrode powder may be obtained by pulverizing the (cut) primary electrode films through the edge slitting.

In an embodiment of the present disclosure, the area of the cut primary electrode film through the edge slitting process may be, for example, 20% or less, specifically 1% to 20%, 5% to 20%, 10% to 20%, 10% to 15%, or 15% to 20% based on the total area of the primary electrode film, but is not limited thereto.

When the step (S4) is completed, the mixture film that performs the role of the electrode mixture, i.e., the electrode film may be made. The electrode film may be referred to as a free-standing film.

As described above, the steps (S1) to (S4) may be repeatedly performed one or two times or more (n times). For example, when poor films occur in the step (S4), the reused electrode powder may be first obtained by pulverizing the poor films, and the steps (S1) to (S4) may be repeatedly performed.

As described above, in another embodiment of the present disclosure, the reused electrode powder may be derived from the process of making the electrode film using the first electrode powder.

Since the resulting electrode film does not contain a solvent, the electrode film is not almost flowable, and thus it is easy to handle and the electrode film may be formed in desired shapes and used to manufacture electrodes of various shapes. In addition, when the electrode film is used to manufacture electrodes, there is no need to perform a drying process to remove the solvent, leading to significant improvements in the efficiency of the electrode manufacturing process, and it may be possible to solve the problem arising in the manufacture of dry electrodes such as granulation of the active material or disintegration of the fibrillated binder.

The step (S5) is the lamination step for forming the electrode film on at least one surface of the current collector.

In an embodiment of the present disclosure, the current collector is not limited to a particular type and may include those having high conductivity without causing any chemical change to the battery, and may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam and a nonwoven. Further, the current collector may be coated with a conductive primer in whole or in part to reduce the resistance on the surface and improve the adhesion strength. Here, the conductive primer may comprise a conductive material and a binder, and the conductive material is not limited to a particular material and may include any material having conductive properties, and for example, carbon-based materials.

In an embodiment of the present disclosure, the lamination may be the step of rolling and attaching the electrode film onto the current collector to a predetermined thickness. The lamination may be performed by lamination rolls, and in this instance, the lamination rolls may be maintained at the temperature in a range between room temperature (25°C) and 200°C, but is not limited thereto.

The dry electrode according to another aspect of the present disclosure comprises an electrode current collector; and the electrode film disposed on the electrode current collector, and comprising the active material, the conductive material and the binder, and is manufactured by the above-described manufacturing method.

The dry electrode according to an embodiment of the present disclosure exhibits the similar level of appearance and the similar mechanical properties such as tensile strength and elongation to dry electrodes manufactured using only the new electrode powder without using the reused electrode powder.

A secondary battery according to still another aspect of the present disclosure comprises an electrode assembly comprising a positive electrode, a negative electrode and a separator and a battery case accommodating the electrode assembly together with a lithium containing nonaqueous electrolyte, wherein at least one of the positive electrode or the negative electrode is the above-described dry electrode.

The detailed structure of the secondary battery is well known, and its description is omitted.

An energy storage system according to yet another aspect of the present disclosure comprises the above-described secondary battery as a unit battery.

The detailed structure of the energy storage system is well known, and its description is omitted.

Hereinafter, the present disclosure will be described in more detail through examples, and the following examples are provided by way of illustration and the scope of the present disclosure is not limited thereto.

### [Manufacture of dry electrode]

### Example 1

A dry electrode was prepared by the following steps.

### Step 1. Preparation of first electrode powder

965g of lithium nickel cobalt manganese aluminum oxide (NCMA) Li[Ni_{0.86}Mn_{0.05}Co_{0.07}]Al_{0.02}O₂ as a positive electrode active material, 10g of carbon black as a conductive material and 25g of polytetrafluoroethylene (PTFE) as a binder were put into a blender and mixed at 10,000 rpm for 3 minutes to obtain a mixed first electrode powder.

### Step 2. Preparation of reused electrode powder

A kneader (SHIN-IL MILL CO., LTD.) was stabilized to the temperature of 150°C, the first electrode powder prepared through the step 1 was put into the kneader and the kneader worked under the pressure of 1.1 atm at 40 rpm for 5 minutes to obtain a mass of mixture.

The mass of mixture was put into a blender (Waring) and pulverized at 10,000 rpm for 1 minute to obtain powder, and the powder was put into a lab calendar (roll diameter: 160 mm, roll temperature: 100°C) three times in the condition that the active material loading was 5.0 mAh/cm² to make a 85*µ*m thick film. In this instance, edge slitting was performed such that the resulting film was 270 mm in width to manufacture an electrode film.

The cut parts by the edge slitting were put into the blender (Waring) and pulverized at 10,000 rpm for 1 minute to obtain a reused electrode powder.

### Step 3. Preparation of second electrode powder

800g of the first electrode powder obtained in the step 1 and 200g of the reused electrode powder obtained in the step 2 were put into a blender (Waring) and mixed at 10,000 rpm for 1 minute to obtain an electrode powder mixture.

A kneader (SHIN-IL MILL CO., LTD.) was stabilized to the temperature of 150°C, the obtained electrode powder mixture was put into the kneader, and the kneader worked under the pressure of 1.1 atm at 40 rpm for 5 minutes to obtain a mass of mixture.

The mass of mixture was put into the blender (Waring) and pulverized at 10,000 rpm for 1 minute to obtain a second electrode powder.

### Step 4. Preparation of electrode film

The second electrode powder obtained in the step 3 was put into a lab calendar (roll diameter: 160 mm, roll temperature: 100°C) three times in the condition that the active material loading was 5.0 mAh/cm² to make a 85*µ*m thick film. In this instance, edge slitting was performed such that the resulting film was 270 mm in width to prepare an electrode film.

### Step 5. Preparation of electrode

An electrode was prepared by placing the electrode film obtained in the step 4 on one surface of a coated aluminum foil (16 *µ*m) and laminating through lamination rolls that are maintained at 150°C.

### Example 2

An electrode was prepared by the same method as Example 1 except that 600 g of the first electrode powder and 400 g of the reused electrode powder were used in the step 3.

### Example 3

An electrode was prepared by the same method as Example 1 except that 400 g of the first electrode powder and 600 g of the reused electrode powder were used in the step 3.

### Comparative Example 1

An electrode was prepared by the same method as Example 1 except that the first electrode powder was not used and 1,000 g of the reused electrode powder was used in the step 3.

### Comparative Example 2

A dry electrode was prepared by the following steps.

### Step 1. Preparation of first electrode powder

965g of lithium nickel cobalt manganese aluminum oxide (NCMA) Li[Ni_{0.86}Mn_{0.05}Co_{0.07}]Al_{0.02}O₂ as a positive electrode active material, 10g of carbon black as a conductive material and 25g of polytetrafluoroethylene (PTFE) as a binder were put into a blender and mixed at 10,000 rpm for 3 minutes to obtain a powder mixture.

A kneader (SHIN-IL MILL CO., LTD.) was stabilized to the temperature of 150°C, the powder mixture was put into the kneader, and the kneader worked under the pressure of 1.1 atm at 40 rpm for 5 minutes to obtain a mass of mixture.

The mass of mixture was put into the blender (Waring) and pulverized at 10,000 rpm for 1 minute to obtain a first electrode powder.

### Step 2. Preparation of electrode film

800g of the first electrode powder obtained in the step 1 and 200g of the reused electrode powder obtained in the step 2 of Example 1 were mixed to obtain a powder mixture.

The obtained powder mixture was put into a lab calendar (roll diameter: 160 mm, roll temperature 100°C) three times in the condition that the active material loading was 5.0 mAh/cm² to make a 85*µ*m thick film. In this instance, edge slitting was performed such that the resulting film was 270 mm in width to prepare an electrode film.

### Step 3. Preparation of electrode

An electrode was prepared by placing the electrode film obtained in the step 2 on one surface of a coated aluminum foil (15 *µ*m) and laminating through lamination rolls that are maintained at 150°C.

### [Evaluation of properties]

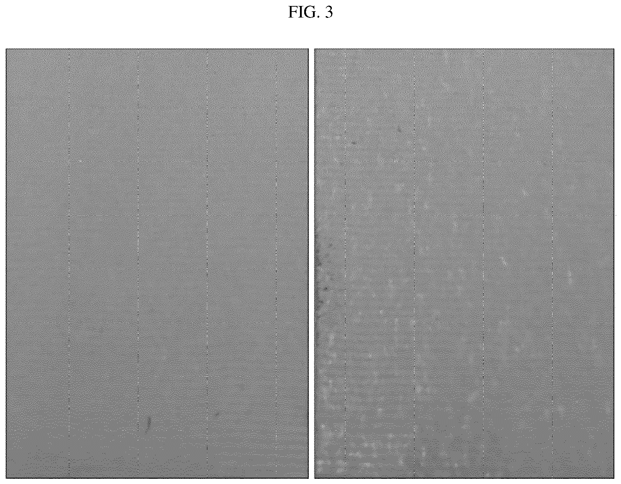

The tensile strength and appearance characteristics of the electrode film included in each dry electrode of Examples 1 to 3 and Comparative Examples 1 and 2 prepared by the following method were evaluated and the results are shown in the following Table 1 and FIG. 3.

The evaluation results are presented together with the properties evaluation results of the electrode film prepared in the step 2 of Example 1 as Control group.

### Tensile strength

The stress and strain values were measured by pulling the electrode film tailored into 1 cm X 5 cm at the speed of 5 cm/min using UTM (Zwick), and in this instance, a maximum stress value immediately before break was evaluated as tensile strength.

A target properties value was set to 0.7 MPa or more to prevent breaking in the subsequent process.

### Appearance

The appearance was observed by eyes, and when a spot was observed in the film, the film was evaluated as having poor appearance, and the appearance evaluation results of Example 1 and Comparative Example 2 are shown in FIG. 3.

**[Table 1]**

| Electrode | Active material loading (mAh/cm²) | Weight ratio of first electrode powder: reused electrode powder | Tensile strength (MPa) | Appearance |
|---|---|---|---|---|
| Example 1 | 5.0 | 80:20 | 1.00 | good |
| Example 2 | 5.0 | 60:40 | 0.82 | good |
| Example 3 | 5.0 | 40:60 | 0.72 | good |
| Comparative Example 1 | 5.0 | 0:100 | 0.42 | good |
| Comparative Example 2 | 5.0 | 80:20 | 1.05 | poor |
| Control group | 5.0 | 100:0 | 1.16 | good |

As shown in the above results, it was confirmed that in the case of Comparative Example 1 using only the reused electrode powder, the mechanical properties of the electrode film were poor. Additionally, it was confirmed that in the case of Comparative Example 2, when the electrode film was made by mixing the first electrode powder produced through pulverization after kneading with the reused electrode powder and calendaring, uniformity of the powder in the film was low and the appearance characteristics were poor. When the reused electrode powder was used, the tensile strength of the electrode film was low due to the repeated fibrillation (kneading) of the binder, compared to the use of the first electrode powder alone.

In contrast, it was confirmed that Examples 1 to 3 using 70% or less of the reused electrode powder had the similar level of mechanical properties and appearance characteristics to Control group using only the new electrode powder.

While the present disclosure has been hereinabove described with reference to the embodiments and drawings, it is obvious to those skilled in the art that a variety of modifications and changes may be made within the scope of the present disclosure based on the foregoing description.

## Claims

1. A method for manufacturing a dry electrode, comprising:
(S1) obtaining a first electrode powder from a mixture comprising an active material and a binder;
(S2) kneading the first electrode powder and a reused electrode powder to obtain a mass of mixture;
(S3) pulverizing the mass of mixture to obtain a second electrode powder;
(S4) calendaring the second electrode powder to obtain an electrode film; and
(S5) placing and laminating the electrode film on at least one surface of a current collector.

2. The method for manufacturing the dry electrode according to claim 1, wherein the reused electrode powder is obtained by pulverizing defective films resulting from a previously performed process of manufacturing a dry electrode.

3. The method for manufacturing the dry electrode according to claim 1, wherein the reused electrode powder is obtained by pulverizing an electrode film obtained from a first electrode powder, the process of obtaining the electrode film from the first electrode powder comprises the following method:
(S1-1) kneading the first electrode powder to obtain a mass of mixture;
(S1-2) pulverizing the mass of mixture to obtain an electrode powder; and
(S1-3) calendaring the electrode powder to obtain the electrode film.

4. The method for manufacturing the dry electrode according to claim 1, wherein the calendaring (S4) further comprises carrying out edge slitting of a primary electrode film obtained by the of calendaring the second electrode powder to obtain the electrode film,
wherein the (S1) to (S4) are repeatedly performed n times, wherein n is an integer of 2 or greater, and
wherein the reused electrode powder used in the kneading (S2) the n-th time is obtained by pulverizing cut primary electrode films through edge slitting in the calendaring (S4) the first to n-1-th times.

5. The method for manufacturing the dry electrode according to claim 1, wherein the (S2) further comprises, before the kneading,
mixing the first electrode powder and the reused electrode powder to obtain the electrode powder mixture,
wherein the mass of mixture is obtained by kneading the obtained electrode powder mixture.

6. The method for manufacturing the dry electrode according to claim 1 or 5, wherein in the (S2), a weight of the first electrode powder is 30 wt% or more based on a total 100 wt% of the first electrode powder and the reused electrode powder.

7. The method for manufacturing the dry electrode according to claim 6, wherein in the (S2), a weight ratio of the first electrode powder and the reused electrode powder is 30:70 to 99:1.

8. The method for manufacturing the dry electrode according to claim 1, wherein the first electrode powder is a mixture obtained by the step of obtaining a mixture comprising the active material and the binder.

9. The method for manufacturing the dry electrode according to claim 1, wherein the kneading (S2) is performed at 70°C to 200°C under a pressure which is equal to or higher than atmospheric pressure.

10. The method for manufacturing the dry electrode according to claim 1, wherein the kneading (S2) is performed at a shear rate of 10/s to 500/s for 1 minute to 30 minutes.

11. The method for manufacturing the dry electrode according to claim 1, further comprising sieving the pulverized second electrode powder, after the pulverizing (S3) and before the calendaring (S4).

12. A dry electrode, comprising:
an electrode current collector; and
an electrode film disposed on the electrode current collector, and comprising an active material and a binder,
wherein the dry electrode is manufactured by the manufacturing method of claim 1.

13. A secondary battery, comprising:
an electrode assembly comprising a positive electrode, a negative electrode and a separator and a battery case accommodating the electrode assembly and a lithium containing nonaqueous electrolyte,
wherein at least one of the positive electrode or the negative electrode is the dry electrode according to claim 12.

14. An energy storage system, comprising:
the secondary battery according to claim 13 as a unit battery.
